(19) Europäisches Patentamt / European Patent Office / Office européen des brevets

(11) **EP 1 320 047 B1**

(12) **EUROPÄISCHE PATENTSCHRIFT**

(45) Veröffentlichungstag und Bekanntmachung des Hinweises auf die Patenterteilung:
**09.09.2009   Patentblatt 2009/37**

(51) Int Cl.:
*G06F 17/50* ^(2006.01)

(21) Anmeldenummer: **02026756.3**

(22) Anmeldetag: **02.12.2002**

(54) **Verfahren zur Analyse des Zeitverhaltens komplexer verteilter Systeme**

Method for analyzing the temporal behavior of complex distributed systems

Méthode pour analyser la caractéristique temporelle des systèmes distribués complexes

(84) Benannte Vertragsstaaten:
**AT BE BG CH CY CZ DE DK EE ES FI FR GB GR IE IT LI LU MC NL PT SE SI SK TR**

(30) Priorität: **30.11.2001   DE 10158853**

(43) Veröffentlichungstag der Anmeldung:
**18.06.2003   Patentblatt 2003/25**

(73) Patentinhaber: **Symtavision GmbH**
**38122 Braunschweig (DE)**

(72) Erfinder:
• **Ernst, Rolf, Prof. Dr.- Ing.**
**38112 Braunschweig (DE)**
• **Richter, Kai, Dipl.- Ing.**
**38104 Braunschweig (DE)**

(74) Vertreter: **Gerstein, Hans Joachim et al**
**Gramm, Lins & Partner GbR**
**Theodor-Heuss-Strasse 1**
**38122 Braunschweig (DE)**

(56) Entgegenhaltungen:
• **JERSAK M ET AL: "Combining complex event models and timing constraints" HIGH-LEVEL DESIGN VALIDATION AND TEST WORKSHOP, 2001. PROCEEDINGS. SIXTH IEEE INTERNATIONAL 7-9 NOV. 2001, PISCATAWAY, NJ, USA,IEEE, 7. November 2001 (2001-11-07), Seiten 89-94, XP010569569 ISBN: 0-7695-1411-1**
• **RICHTER K ET AL: "Event model interfaces for heterogeneous system analysis" PROCEEDINGS 2002 DESIGN, AUTOMATION AND TEST IN EUROPE CONFERENCE AND EXHIBITION IEEE COMPUT. SOC LOS ALAMITOS, CA, USA, 4. März 2002 (2002-03-04), Seiten 506-513, XP002319869 ISBN: 0-7695-1471-5**

**Beschreibung**

Die Erfindung betrifft ein Verfahren zur Analyse des Zeitverhaltens komplexer verteilter Systeme mit Basis-Komponenten, die Datenverarbeitungs-Programmmodule und/oder elektronische Schaltungsmodule aufweisen.

Bei dem Entwurf komplexer verteilter Digitalsysteme werden eine Vielzahl von Komponenten in Form von Datenverarbeitungs-Programmmodulen und/oder elektronischen Schaltungsmodulen miteinander kombiniert, die jeweils einen unterschiedlichen Ursprung haben können. So können die Komponenten von unterschiedlichen Entwicklungsteams entworfen worden sein oder wiederverwendete Komponenten sowie Standardkomponenten sein. Derartige komplexe Digitalsysteme können zeitkritisch sein, da nicht nur eine funktionale Funktionsfähigkeit, d. h. die Berechnung korrekter Werte, sondern auch das Einhalten gegebener zeitlicher Randbedingungen für die Ausgabe der berechneten Werte garantiert werden muss. Beispielsweise sind maximale erlaubte Latenzen (Verzögerungen oder Laufzeiten) oder Reaktionszeiten, z. B. für das Auslösen des Airbags im Auto, oder ein minimaler garantierter Datendurchsatz pro Zeiteinheit, z. B. bei der Videoverarbeitung mit festen Bildwiederholfrequenzen, sicherzustellen. Derartige Randbedingungen müssen bei dem Entwurf der komplexen verteilten Digitalsysteme berücksichtigt werden.

Die bei einem Entwurf eingesetzten Komponenten werden in der Regel mit unterschiedlichsten Verfahren und Werkzeugen entwickelt, die von den Entwicklern in Abhängigkeit von den im Vordergrund stehenden Entwurfsmerkmalen sowie den beherrschten Spezifikationssprachen, Spezifikationsmodellen und Entwurfswerkzeugen ausgewählt werden. Ein herkömmlicher Entwurf eines verteilten Digitalsystems ist daher inhärent heterogen in Bezug auf seine Komponenten.

Mit den einzelnen Programm- und Schaltungsmodulen werden Prozesse implementiert, die gegebenenfalls mit anderen Prozessen um eine Resource, wie z. B. einem Prozessor, konkurrieren. Hierdurch entsteht eine starke gegenseitige Kopplung in Bezug auf das Zeitverhalten des Systems, so dass eine Basis-Komponente mit Datenverarbeitungs-Programmmodulen und/oder elektronischen Schaltungsmodulen unter Berücksichtigung des Prozesses, der Scheduling-Strategie und des Prozessors als Ganzes betrachtet werden muß.

Es ist bekannt, die Prozesse mit einer Prozess-Analyse hinsichtlich der Latenzen oder Laufzeiten einzelner Prozesse zu untersuchen. Hierbei wird angenommen, dass die Resourcen dem momentan betrachteten Prozess exklusiv zur Verfügung stehen. Um die Einhaltung von zeitlichen Rahmenbedingungen in Echtzeitsystemen unter allen Umständen garantieren zu können, wird die Analyse auf die Identifikation von kritischen Situationen (worst-case) abgestellt.

Zusätzlich kann das Kommunikationsverhalten des einzelnen Prozesses mit einer lokalen Analyse ausgewertet werden. Die lokale Analyse ist von den Werkzeugen abhängig, die für den Entwurf einer Basis-Komponente verwendet wurden. Sie wird ferner durch das Zeitverhalten der Basis-Komponenten bestimmt.

Mit der globalen Analyse wird das Zeitverhalten des Gesamtsystems bestimmt. Hierbei werden kausale Zusammenhänge zwischen einzelnen lokalen Basis-Komponenten identifiziert, die Aufschluss über die internen funktionalen Abläufe des Gesamtsystems liefern. Diese Zusammenhänge können aus dem Wissen über das Kommunikationsverhalten der einzelnen Prozesse extrahiert werden. Allerdings sind interne Abläufe nicht nur auf einfache Ereignis- und Ablaufketten beschränkt, sondern enthalten oft die Aufspaltung und Synchronisation der abstrakten Systemfunktionen in parallele Prozesse. Das Gesamtzeitverhalten kann daher nicht durch einfache Akkumulation der Ausführungszeiten der einzelnen Prozesse gebildet werden.

Das Zeitverhalten des Gesamtsystems wird zudem durch die gemeinsame Nutzung von Resourcen beeinflusst. Wenn beispielsweise mehrere Prozesse auf einem Prozessor ausgeführt werden sollen, muss der Zugriff der Prozesse auf dem Prozessor kontrolliert werden, da jeweils nur ein Prozess zur Zeit arbeiten kann. Diese Zugriffskontrolle bzw. Ablaufplanung wird als Scheduling bezeichnet und ist integraler Bestandteil einer Basis-Komponente. In verteilten Systemen wird zudem der Zugriff auf gemeinsam genutzte Kommunikationsmedien, wie Datenbusse, durch Arbitrierungsmechanismen kontrolliert. Die Einflüsse durch das Scheduling und die Arbitrierung auf das Zeitverhalten können nur mit Hilfe komplexer mathematischer Zeitmodelle erfasst werden.

In C. L. Liu, J. W. Layland: Scheduling Alghorithms for Multiprogramming in a Hard-Real-Time Environment in Journal of the Association for Computing Machinery, Vol. 20, Nr. 1, Januar 1973, Seiten 46-61 ist ein Verfahren zur lokalen Analyse von Systemen mit statischen Prioritätszuweisungen beschrieben, das auf strikt periodische Prozessaktivierungen beschränkt ist. Jeder Prozess hat eine Zeitperiode, die den Abstand zweier Aktivierungen angibt. Die Prozesse werden als funktional unabhängig betrachtet, d. h. die Prozesse kommunizieren nicht und rufen sich nicht gegenseitig auf. Das Verfahren basiert auf der Berechnung von oberen Schranken (worst-case bounds) für die Antwortzeiten von Prozessen. Die Antwortzeit eines Prozesses wird dabei zwischen Prozessaufruf und Prozessbeendigung gemessen und enthält neben der durch lokale Analyse bestimmten Kernausführungszeit auch die Unterbrechungen durch höherpriore Prozesse. Die Antwortzeit eines Prozesses ergibt sich hierbei als Summe der Kernausführungszeit des Prozesses und der Gesamtverzögerung durch Unterbrechungen durch andere Prozesse. Die maximale und auf entsprechende Weise die minimale Antwortzeit kann mathematisch durch iteratives Lösen eines entsprechenden Gleichungssystems bestimmt werden.

Dieses Analyseverfahren wurde in vielerlei Hinsicht erweitert, um auch für andere Aktivierungsschemata garantierte Grenzen zu erhalten. So ist in K. W. Tindell: An Extendible Approach For Analysing Fixed Priority Hard Real-Time Tasks, in: Journal of Real-Time Systems 6(2), März 1994, Seiten 133 bis 152 ein lokales Analyseverfahren für Prozesse mit periodischer Aktivierung mit Jitter, d. h. mit einer maximal erlaubten Verzögerung der Aktivierung in Bezug auf eine feste Periode, sowie für eine Bündel-Aktivierung mit Pufferung beschrieben.

Ähnliche Analysen für eine andere Scheduling-Strategie (Zeitscheibenverfahren) sind in H. Kopetz, G. Grünsteidl: TTP - A Protocol for Fault-Tolerant Real-Time Systems: in IEEE Trans.Computers, Januar 1994, Seiten 14 bis 23 beschrieben, bei dem komplexe verteilte Systeme mit einem zeitgetriggerten Protokoll (timetriggered Protocol) erfolgt. Das Verfahren basiert auf periodischen Ereignisströmen. Die Kommunikationsbandbreite wird statistisch erfasst und es werden Jitterknoten im Zeitbereich analysiert.

Die Aktivierungen der Prozesse in den Basis-Komponenten beruhen auf Daten oder Ereignissen, die zwischen den einzelnen Basis-Komponenten ausgetauscht werden. Die Ereignisströme werden je nach Eigenschaft als abstrakte Ereignismodelle dargestellt. Das einfachste abstrakte Ereignismodell stellt periodisch wiederkehrende Ereignisse durch einen einzigen Parameter, die Periode $T$, dar (Periodic). Ein etwas komplexeres Ereignismodell trifft die Annahme, dass die Ereignisse generell periodisch sind, wobei jedoch ein variierender beschränkter Versatz zu einem exakt periodischen Ereignis zugelassen ist (Jitter). Mit dem sogenannten Burst-Ereignismodell werden bündelartig auftretende Ereignisse erfasst (Burst). Mit dem Ereignismodell für sporadische Ereignisse wird ein minimaler zeitlicher Abstand zweier aufeinanderfolgender Ereignisse bestimmt (Sporadic).

Diese vier genannten Ereignismodelle - periodisch, Jitter, Burst, sporadisch - stellen die wichtigsten Ereignismodelle dar. Entsprechend sind Scheduling-Verfahren mit statischen Prioritäten, dynamischen Prioritätenzuweisungen in Abhängigkeit von maximal erlaubten Antwortzeiten, zyklische Zeitschlitzverfahren, bei dem jedem Prozess der Prozessor für eine gewisse Zeit exklusiv zur Verfügung steht, etc. bekannt und es existieren Analysemodelle zur Beschreibung des Zeitverhaltens (Zeitmodelle).

Bei der globalen Analyse von komplexen verteilten Systemen besteht das Problem, dass die lokalen Analyseverfahren auf die einzelnen Basis-Komponenten beschränkt sind und die Art der Ereignismodelle vorgeben. So sind Systeme mit verschiedenartigen Ereignismodellen in der Regel nicht mit einem einzigen Analyseverfahren analysierbar.

In Pai H.Chou, Gaetano Boriello: Synthesis and Optimization of Coordination Controllers for Distributed Embedded Systems, in: Proc. Design Automation Conference (DAC), 2000, Los Angeles, S. 410 ff. ist eine einheitliche Beschreibung eines Gesamtsystems zur Durchführung einer globalen Analyse beschrieben, die auf Zuständen von Prozessen beruht. Zur Analyse müssen kritische Fälle des Gesamtsystems, das sich aus dem Kreuzprodukt der Einzelprozesszustände ergibt, identifiziert werden. Dies führt bei komplexen Systemen nachteilig zu einer Zustandsraumexplosion mit der Folge, dass eine Gesamtanalyse nahezu unmöglich ist.

M. Jersak, K. Richter, R. Ernst: "Combining complex event models and timing constraints", Proceedings of SIXTH IEEE INTERNATIONAL HIGH-LEVEL DESIGN VALIDATION AND TEST WORKSHOP 2001, 7 - 9 Nov. 2001, MONTEREY, CA, USA, Seiten 89-94, schlägt vor, eine gemeinsame Spezifikation für Ereignismodelle und Zeitbeschränkungen an Ein- und Ausgängen benachbarter Basis-Komponenten zu nutzen. Das skizzierte Verfahren verlangt jedoch einschränkend, dass im System benachbarte Komponenten identische Ereignismodelle und -ströme aufweisen, was für die meisten komplexen verteilten System aus der Praxis nicht gegeben ist.

Aufgabe der Erfindung ist es daher, ein verbessertes, effizientes Verfahren zur Analyse des Zeitverhaltens komplexer verteilter Systeme zu schaffen, mit dem ein komplexes verteiltes System global hinsichtlich des Zeitverhaltens unter Berücksichtigung verschiedenartiger Ereignismodelle und unterschiedlicher lokaler Analysemethoden für die einzelnen Basis-Komponenten ermöglicht wird.

Die Aufgabe wird mit dem gattungsgemäßen Verfahren erfindungsgemäß gelöst durch die Schritte:

a) Bestimmen von Eingangs-Ereignismodellen zur Charakterisierung von Eingangsereignisströmen am Eingang der jeweiligen Basis-Komponenten des verteilten Systems;

b) Bestimmen von Transformationsfunktionen zur Transformation der Darstellung von Eingangs-Ereignisströmen am Eingang einer Basis-Komponente in ein für die Basis-Komponente geeignetes Eingangs-Ereignismodell;

c) Lokales Analysieren der Basis-Komponenten mit den zugeordneten Eingangs-Ereignismodellen zur Ermittlung der Zeitverhalten der einzelnen Basis-Komponenten;

d) Bestimmen des Zeitverhaltens des komplexen verteilten Systems aus den ermittelten Zeitverhalten der einzelnen Basis-Komponenten.

Durch die Transformation der Darstellung der Eingangs-Ereignisströme an die analysierbaren geeigneten Eingangs-Ereignismodelle zugeordneter Basis-Komponenten kann nunmehr eine lokale Analyse mit den zur Verfügung stehenden Analysemethoden durchgeführt werden. Das ermittelte Zeitverhalten für die Basis-Komponenten hat dabei auch im gesamten verteilten System Gültigkeit, da lediglich eine Transformation der Ereignismodelle bzw. Ereignisströme durchgeführt wurde, so dass ein Zeitmodell für das gesamte verteilte System entsteht. Mit anderen Worten, es werden Basis-Komponenten im Entwurf derart gekoppelt, dass die Kopplung eine mathematische und daher analysierbare Korrespondenz enthält. Damit ist auch die Kopplung der bestehenden Analyseverfahren zu einer globalen Analyse erstmals möglich.

Zwei aufeinander folgende Prozesse mit unterschiedlichen Ereignismodellen für den Ausgangs-Ereignisstrom am Ausgang der vorhergehenden Basis-Komponente und für den Eingangs-Ereignisstrom am Eingang der nachfolgenden Basis-Komponente werden somit mit Hilfe der Transformationsfunktionen aufeinander angepasst.

Einerseits können Transformationsfunktionen zur Transformation der Darstellung von Eingangs-Ereignisströmen mittels Parameter für zugeordnete Eingangs-Ereignismodelle bestimmt werden. Es erfolgt also quasi eine Anpassung der Eingangs-Ereignismodell-Funktionen.

Für den Fall, dass ein Eingangs-Ereignisstrom nicht mit Hilfe der zur Analyse der zugehörigen Basis-Komponente zur Verfügung stehenden Ereignismodellen charakterisiert oder keine Transformationsfunktion bestimmt werden kann, wird der Eingangs-Ereignisstrom selbst mit Hilfe einer geeigneten Transformationsfunktion transformiert. Dies kann gegebenenfalls in Verbindung mit der Transformationsfunktion für das zugeordnete Ereignismodell erfolgen.

Die lokale Analyse einer Basis-Komponente erfolgt dann mit dem transformierten Eingangs-Ereignisstrom und gegebenenfalls mit dem quasi transformierten Ereignismodell für den Eingangs-Ereignisstrom.

Zur Bestimmung der Transformationsfunktionen ist es vorteilhaft, wenn auch die Ausgangs-Ereignismodelle am Ausgang einer vorgeschalteten Basis-Komponente bestimmt werden. Auf diese Weise können die Ausgangs-Ereignisströme am Ausgang der jeweiligen vorgeschalteten Basis-Komponente des verteilten Systems charakterisiert werden.

Das Analyseverfahren und die Adaption der Transformationsfunktionen wird vorzugsweise iterativ durchgeführt. Mit Hilfe der Iteration kann das komplexe verteilte System optimiert werden. Bei der Iteration kann aber auch ein geeignetes Analyseverfahren schrittweise ausgewählt werden. Durch die Iteration wird auch eine Rückkopplung an vorher berechnete Basis-Komponenten in rückgekoppelten, komplexen verteilten Systemen ermöglicht, so dass die Analyse der Basis-Komponenten nicht nur mit einem statischen Eingangs-Ereignisstrom durchgeführt wird, sondern zusätzlich das komplexe Betriebsverhalten des komplexen verteilten Systems bei der Analyse berücksichtigt wird.

Zur Bestimmung der Transformationsfunktionen werden vorzugsweise Zeitmodelle für die Ereignismodelle klassifiziert und die Transformationsfunktionen aus den Zeitmodell-Klassen abgeleitet.

Beispielsweise sind die vier wesentlichen Ereignismodelle das periodische, das sporadische, das Jitter- und das Burst-Ereignismodell. Für jede diese vier Zeitmodell-Klassen können Transformationsfunktionen festgelegt werden.

Die Ereignismodelle und Transformationsfunktionen werden durch Gleichungssysteme repräsentiert.

Zur globalen Analyse des komlexen verteilten Systems werden vorzugsweise die Gleichungssysteme für die Ereignismodelle und die Transformationsfunktionen der Basiskomponenten sowie die Zeitmodelle der Basis-Komponenten in ein Gesamtgleichungssystem zusammengefasst. Die globale Analyse erfolgt dann mit dem Gesamtgleichungssystem und mindestens einem definierten Eingangs-Ereignisstrom des komplexen verteilten Systems. Eine solche globale Analyse ist nunmehr erstmals möglich, da die verschiedenartigen, nicht miteinander kompatiblen Ereignismodelle erfindungsgemäß mit Hilfe von Transformationsfunktionen aufeinander abgestimmt werden.

Das komplexe verteilte System kann durch Einfügen von Zusatzkomponenten in das System zur Realisierung von Transformationsfunktionen optimiert werden. Diese Zusatzkomponenten können z. B. Datenpufferelemente und/ oder Zeitgeber sein und zur Anpassung der Ereignismodelle bzw. Ausgangs- und Eingangs-Ereignisströmen dienen. Diese Zusatzkomponenten können einerseits lediglich zur theoretischen Analyse des komplexen verteilten Systems vorgesehen sein. Sie können aber auch zur Optimierung als Schaltungskomponenten in das tatsächlich realisierte verteilte System dauerhaft eingefügt werden. Die Zusatzkomponenten sind dann nicht nur Analysehilfsmittel, sondern auch Elemente zur Optimierung des komplexen verteilten Systems bei dem Entwurf.

Die Erfindung wird nachfolgend anhand der beigefügten Zeichnungen näher erläutert. Es zeigen:

Fig. 1 - Blockdiagramm von zwei aufeinanderfolgenden Basis-Komponenten und einer Transformationsfunktion für die Ereignismodelle;

Fig. 2 - Diagramm mit Eigenschaften der Transformation zwischen vier verschiedenen Klassen von Ereignismodellen;

Fig. 3 - Blockdiagramm von zwei aufeinanderfolgenden Basis-Komponenten mit Transformationsfunktionen für die Ereignismodelle und die Eingangs-Ereignisströme;

Fig. 4 Worst-case Zeitdiagramm einer Transformationsfunktion für Eingangs-Ereignisströme zur Transformation von einem Burst- Ereignismodell in ein periodisches Ereignismodell;

Fig. 5 - Zeitdiagramm der Verknüpfung zweier periodischer Ereignisströme;

Fig. 6 -    Blockdiagramm eines komplexen verteilten Systems mit Zusatzelementen für die Transformation zur Optimierung des Systems.

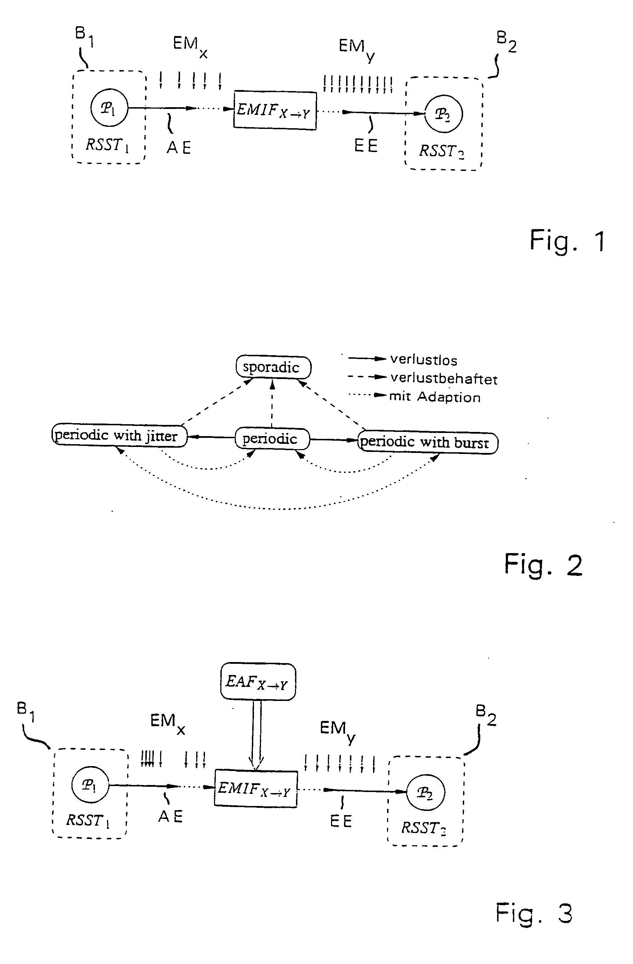

Die Figur 1 lässt ein Blockdiagramm mit einer ersten Basis-Komponente $B_1$ und einer nachfolgenden Basis-Komponente $B_2$ erkennen. Eine Basis-Komponente B im Sinne der Erfindung beinhaltet eine Menge von sich abwechselnden Prozessen $P_1$, $P_n$ und eine Ablaufsplanungs- bzw. Scheduling-Strategie $RSST_1$ (Resource Sharing Strategy) zur Planung und Festlegung des Zugriffs auf gemeinsam genutzte Resourcen, wie z. B. eines Prozessors oder eines Datenbusses. Der Ausgangs-Ereignisstrom AE am Ausgang der Basiskomponente $B_1$ wird durch den Prozess $P_1$ und die Ablaufstrategie $RSST_1$ der Basiskomponente $B_1$ festgelegt. Das zugehörige Ausgangs-Ereignismodell $EM_X$ und das Ausgangs-Ereignisstrom AE kann durch bekannte lokale Analyseverfahren bestimmt werden.

Zur lokalen Analyse der nachfolgenden Basiskomponente $B_2$ ist ein Eingangs-Ereignismodell $EM_Y$ für den Eingangs-Ereignisstrom EE am Eingang der nachfolgenden Basiskomponente $B_2$ in einer Ereignismodell-Klasse erforderlich, die mit einem Analyseverfahren ausgewertet werden kann, das für die nachfolgende Basis-Komponente $B_2$ zur Verfügung steht. Es besteht daher die Notwendigkeit, dass das Ausgangs-Ereignismodell $EM_X$ und das Eingangs-Ereignismodell $EM_Y$ miteinander kompatibel sein müssen, um eine lokale Analyse der Basiskomponenten B unter Berücksichtigung der Abhängigkeiten im komplexen verteilten System zu ermöglichen.

Erfindungsgemäß wird das Eingangs-Ereignismodell $EM_Y$ zur Charakterisierung des Eingangs-Ereignisstroms EE am Eingang der Basis-Komponente $B_2$ bestimmt. Dann wird eine Transformationsfunktion $EMIF_{X\rightarrow Y}$ für das Eingangs-Ereignismodell $EM_Y$ bestimmt, um den Ausgangs-Ereignisstrom AE am Ausgang der vorhergehenden Basis-Komponente $B_1$ an das Eingangs-Ereignismodell $EM_Y$ der nachfolgenden Basis-Komponente $B_2$ anzupassen.

Anschließend kann eine lokale Analyse der nachfolgenden Basis-Komponente $B_2$ mit dem bekannten Ausgangs-Ereignisstrom AE der vorhergehenden Basis-Komponente $B_1$ unter Verwendung der Transformationsfunktion $EMIF_{X\rightarrow Y}$ und dem Eingangs-Ereignismodell $EM_Y$ in bekannter Weise durchgeführt werden.

Derartige Transformationsfunktionen $EMIF_{X\rightarrow Y}$ sind generell unidirektional und können nur Ereignisse in eine Richtung transformieren.

Die Figur 2 lässt ein Schaubild mit möglichen Transformationen zwischen den vier wesentlichen Ereignismodell-Klassen erkennen. Diese vier wesentlichen Ereignismodell-Klassen sind periodisch, sporadisch, Jitter und Burst. Bei einem periodischen Ereignismodell (periodic) werden Ereignisse in definierten Zeitabständen $T$ erwartet. Bei einem sporadischen Ereignismodell (sporadic) werden Ereignisse sporadisch erwartet, wobei lediglich ein minimaler Zeitabstand $t$ zwischen zwei Ereignissen bekannt ist. Bei einem Jitter-Ereignismodell werden Ereignisse in einem Zeitintervall $T$ erwartet, wobei jedoch eine maximale Verzögerung $J$ eines Ereignisses in Bezug auf das feste Zeitintervall $T$ erlaubt ist. Bei einem Burst-Ereignismodell (periodic with Burst) erfolgt eine periodische Aktivierung von Ereignissen, wobei die Aktivierung mit einem Bündelfaktor $b$ gebündelt werden kann.

Für diese vier Ereignismodell-Klassen können Ereignisanzahl-Funktionen $n_{ev}(\Delta t)$ angegeben werden, die eine minimale oder maximale Anzahl von Ereignissen innerhalb eines definierten Zeitintervalls $\Delta t$ repräsentieren. Die Ereignisanzahl-Funktion $n_{ev}^{-}(\Delta t)$ kennzeichnet hierbei die Funktion für die minimale Anzahl von Ereignissen und die Ereignisanzahl $n_{ev}^{+}(\Delta t)$ kennzeichnet die Funktion für die maximale Anzahl von Ereignissen.

Die Parameter und Ereignisanzahl-Funktionen sind nachfolgend tabellarisch aufgeführt:

Tabelle 1

| Ereignismodell / Parameter | $n_{ev}^{-}(\Delta t)$ | $n_{ev}^{+}(\Delta t)$ |
|---|---|---|
| periodisch $<T>$ | $\left\lfloor \dfrac{\Delta t}{T} \right\rfloor$ | $\left\lceil \dfrac{\Delta t}{T} \right\rceil$ |
| sporadisch $<t>$ | $0$ | $\left\lceil \dfrac{\Delta t}{t} \right\rceil$ |
| Jitter $<T,J>$ | $\left\lfloor \dfrac{\Delta t - J}{T} \right\rfloor$ | $\left\lceil \dfrac{\Delta t + J}{T} \right\rceil$ |
| Burst $<T,t,b>$ | $\left\lfloor \dfrac{\Delta t}{T} \right\rfloor b + \max\left(0, \left\lfloor \dfrac{\Delta t - \left(\left\lfloor \dfrac{\Delta t}{T}\right\rfloor + 1\right)T}{t} + b \right\rfloor\right)$ | $\left\lfloor \dfrac{\Delta t}{T} \right\rfloor b + \min\left(b, \left\lceil \dfrac{\Delta t - \left\lfloor \dfrac{\Delta t}{T}\right\rfloor T}{t} \right\rceil\right)$ |

In ähnlicher Weise können auch für andere Ereignismodelle Ereignisanzahl-Funktionen gefunden werden.

Für die Transformation von einem periodischen-Ereignismodell zu einem Jitter-Ereignismodell bzw. einem Burst-Ereignismodell können verlustlose Transformationsfunktionen gefunden werden. Dies ist in der Figur 2 als Pfeil mit durchgezogener Linie gekennzeichnet.

Für die Transformation zwischen einem Jitter-Ereignismodell, einem periodischen-Ereignismodell oder einem Burst-Ereignismodell in ein sporadisches-Ereignismodell können nur verlustbehaftete Transformationsfunktionen (lossy) gefunden werden. Dies ist durch die Pfeile mit gestrichelter Linie gekennzeichnet.

Für die Transformation zwischen einem Jitter-Ereignismodell oder einem Burst-Ereignismodell in ein periodisches Ereignismodell bzw. eines Jitter Ereignismodell in ein Burst-Ereignismodell und umgekehrt können Transformationsfunktionen nur mit einer Adaption gefunden werden werden. Eine einfache Transformation ist nicht möglich.

Die möglichen Transformationsfunktionen für die dargestellten wesentlichen Ereignismodell-Klassen sind in der nachfolgenden Tabelle 2 aufgelistet.

Tabelle 2

| $EMIF_{X \rightarrow Y}$ | Y = periodisch | Y = Jitter | Y = Burst | Y = sporadisch |
|---|---|---|---|---|
| X = periodisch | $T_y = T_X$ (identisch) | $T_Y = T_X$, $J_Y = 0$ | $T_Y = T_X$, $b_Y = 1$, $t_Y = T_Y$ | $t_Y = T_X$ (verlustbehaftet) |
| X = Jitter | - | $T_Y = T_X$ $J_Y = J_X$ (identisch) | - | $t_Y = T_X - J_X$ (verlustbehaftet) |
| X = Burst | - | - | $T_Y = T_X$ (identisch) $b_Y = b_X$ (identisch) $t_Y = t_X$ (identisch) | $t_Y = t_X$ (verlustbehaftet) |
| X = Sporadisch | - | - | - | $t_Y = t_X$ (identisch) |

Eine Transformationsfunktion $EMIF_{X \rightarrow Y}$ für Ereignismodelle $EM_X$ und $EM_Y$ kann für diese Fälle gefunden werden, in denen die Ereignisanzahl-Funktionen die folgenden Bedingungen erfüllen:

$$n^+_{ev,X}\left(\Delta t\right) \le n^+_{ev,Y}\left(\Delta t\right)$$

und

$$n^-_{ev,X}\left(\Delta t\right) \ge n^-_{ev,Y}\left(\Delta t\right)$$

Durch Auflösen dieser Gleichungen können dann auch die Transformationsfunktionen hergeleitet werden.

Für die Fälle, in denen die beiden o. g. Bedingungen nicht erfüllt sind, muss alternativ oder insbesondere zusätzlich zu der Ereignismodell-Transformationsfunktion $EMIF_{X \rightarrow Y}$ eine Transformationsfunktion zur Transformation des Ausgangs-Ereignisstroms AE in einen angepassten Eingangs-Ereignisstrom EE gefunden werden. Diese zusätzliche Ereignisstrom-Transformationsfunktion $EAF_{X \rightarrow Y}$ ist in der Figur 3 skizziert. Damit ist es generell möglich, anfänglich inkompatible Ereignismodelle EM aneinander anzupassen. Die Ereignisstrom-Transformationsfunktionen $EAF_{X \rightarrow Y}$ werden in der Regel durch Zusatzkomponenten wie Datenpufferelemente und/oder Zeitgeber realisiert. Mögliche Kombinationen von Ereignismodell-Transformationsfunktionen $EMIF_{X \rightarrow Y}$. und Ereignisstrom-Transformationsfunktionen $EAF_{X \rightarrow Y}$, zur Transformation der vormals nicht miteinander kompatiblen Ereignismodelle sind nachfolgend in der Tabelle 3 aufgelistet. Dabei bezeichnet $d^+_{EAU}$ die maximale Datenpufferverzögerung.

Tabelle 3

| X → Y | EMIF$_{X→Y}$ | EAF$_{X→Y}$ | $d_{EAU}^+$ |
|---|---|---|---|
| Jitter → periodisch | $T_Y = T_X$ | Datenpuffer ($T_b = T_X$, $n_b = 1$) | $T_X$ |
| Jitter → Burst | $T_Y = T_X$ <br> $b_Y = 1$ <br> $t_Y = T_Y$ | Datenpuffer ($T_b = T_X$, $n_b = 1$) | $T_X$ |
| Burst → periodisch | $T_Y = \dfrac{T_X}{b_x}$ | Datenpuffer $$\left(T_b = \frac{T_X}{b_X},\, n_b = b_X - \left\lceil b_X\,(b_X - 1)\frac{t_X}{T_X}\right\rceil\right)$$ | $T_X - (b_X - 1)t_X$ |
| Burst → Jitter | $T_Y = \dfrac{T_X}{b_x}$, $J_Y = 0$ | $$\left(T_b = \frac{T_X}{b_X},\, n_b = b_X - \left\lceil b_X\,(b_X - 1)\frac{t_X}{T_X}\right\rceil\right)$$ | $T_X - (b_X - 1)t_X$ |

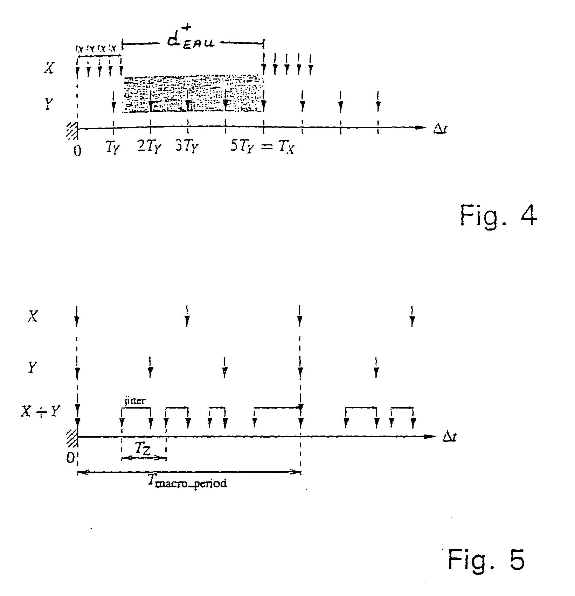

Die Ereignisstrom-Transformationsfunktionen EAF$_{X→Y}$ können in bekannter Weise durch Analysieren der Zeitverhalten der Ereignisströme hergeleitet werden. Dies wird beispielhaft für eine Transformation zwischen einem Burst-Ereignisstrom und einem periodischen Ereignisstrom in Bezug auf die Figur 4 dargelegt.

Von dem Burst-Ausgangs-Ereignisstrom ist bekannt, dass b$_X$ eine Anzahl von Ereignissen alle T$_X$-Zeiteinheiten auftreten. Hierdurch ergibt sich eine durchschnittliche Auftrittszeit der Ereignisse von $\dfrac{T_X}{b_x}$, die die Periode T$_Y$ des periodischen Ereignisses Y des erwarteten Eingangs-Ereignisstroms sein muss. Ansonsten würden die Datenpuffer überlaufen oder leerlaufen. Um eine optimierte Datenpuffergröße festzulegen, muss die worst-case-Situation analysiert werden. Diese tritt auf, wenn die Burst-Ereignisse sobald als möglich auftreten und die periodischen Ereignisse mit einer maximalen Phasenverzögerung von T$_X$ in Bezug auf den Anfang des Burst-Ereignisses auftreten.

Die Figur 4 zeigt ein Beispiel für b$_X$ = 5, wobei fünf aufeinanderfolgende Ereignisse im durchschnittlichen Abstand von T$_X$ in Zeitintervallen von T$_X$ = 5 T$_Y$ auftreten. Dazwischen entsteht eine maximale Pufferverzögerung

$$d_{EAU}^+ = T_X - \left(b_X - 1\right)t_X.$$

Da die Ereignisse periodisch aus dem Puffer ausgeladen werden, beträgt die maximale Anzahl von Ereignissen in dem Puffer

$$n_{EAU}^+ = \left\lceil \frac{d_{EAU}^+}{T} \right\rceil = \left\lceil \frac{T_X - (b_X - 1)\,t_X}{\dfrac{T_X}{b_X}} \right\rceil = b_X - \left\lceil b_X\,(b_X - 1)\frac{t_X}{T_X} \right\rceil$$

Auf ähnliche Weise können auch die Ereignisstrom-Transformationsfunktionen für die anderen Fälle gefunden werden.

Für komplexe verteilte Systeme mit mehreren Eingängen wird die Analyse wesentlich komplexer. So können Prozesse ausgeführt werden, wenn an einem der Eingänge ein Ereignis (ODER-Prozess) auftritt. Ein Prozess kann aber so lange warten, bis an allen Eingängen ein Ereignis auftritt (UND-Prozess). Die Transformationsfunktionen müssen dann gegebenenfalls an die Bedingungen der UND- bzw. ODER-Prozesse angepasst werden.

Die Figur 5 lässt ein Zeitdiagramm für zwei periodische Ereignisströme X und Y mit verschiedenen Perioden T$_X$ = 1,5 T$_Y$ erkennen, die in einem ODER-Prozess miteinander verknüpft werden. Das Ergebnis ist ein periodischer Ereignisstrom X + Y mit Jitter mit den Parametern

$$T_z = \frac{1}{\dfrac{1}{T_Y} + \dfrac{1}{T_X}} \; und \; J_z = T_z$$

für die ODER-Prozesse.

Für UND-Prozesse müssen die Eigangs-Ereignisse zusammenfallen. Dies bedeutet, dass die Anzahl von Ereignissen $n_{ev}(\Delta t)$in beiden Ereignisströmen X und Y für große $\Delta t$ nicht divergieren dürfen.

$$\lim_{\Delta t \longrightarrow \infty} \frac{n_{ev,X}(\Delta t)}{n_{ev,Y}(\Delta t)} = 1$$

Da diese Bedingung für alle Instanzen der Ereignisströme innerhalb der korrespondierenden Ereignismodelle erfüllt sein muss, ist zu gewährleisten, dass die unteren und oberen Grenzen der Anzahl von Ereignissen für Eingangsstrom selbst nicht divergiert:

$$\lim_{\Delta t \longrightarrow \infty} \frac{n_{ev,X}^{-}(\Delta t)}{n_{ev,X}^{+}(\Delta t)} = 1$$

Unter Berücksichtigung dieser Bedingungen können die Transformationsfunktionen auch für UND-Prozesse hergeleitet werden.

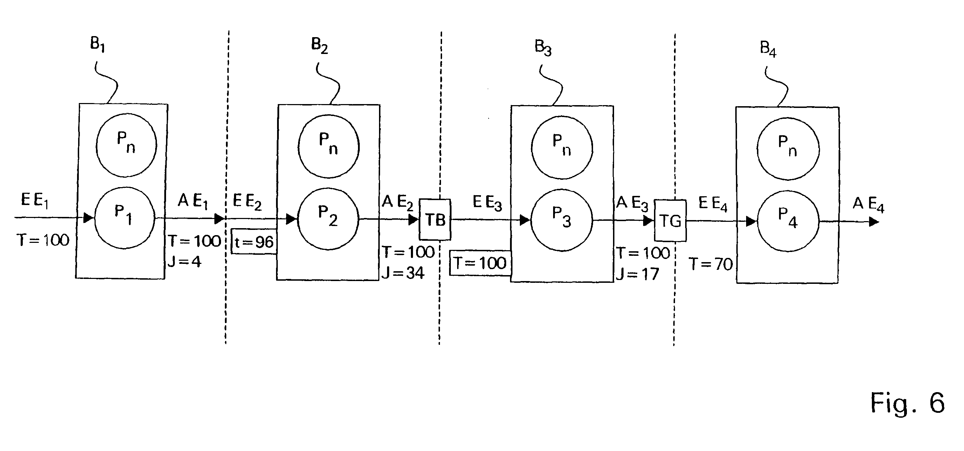

Die Figur 6 lässt ein Blockdiagramm eines komplexen verteilten Systems mit einem Eingangs-Ereignisstrom $EE_1$ in das System und den Basis-Komponenten $B_1$, $B_2$, $B_3$ und $B_4$ erkennen. Der Eingangs-Ereignisstrom $EE_1$ ist periodisch mit einer Periode T = 100.

Das Zeitverhalten der ersten Basis-Komponente $B_1$ wird nun in bekannter Weise mit Hilfe des Eingangs-Ereignisstroms $EE_1$ und dem Parameter T = 100 analysiert. Das Ergebnis dieser Analyse kann ein Antwortzeitintervall mit einer unteren und oberen Grenze für den Prozess $P_1$ sein. Aus den Informationen über dieses Antwortzeitintervall und den Eingangs-Ereignisstrom $EE_1$ können Informationen über den Ausgangs-Ereignisstrom $AE_1$ abgeleitet werden. Beispielhaft wird ein periodischer Ausgangs-Ereignisstrom mit Jitter angenommen. Die Parameter sind T = 100 und J = 4.

Am Eingang der nachfolgenden Basis-Komponente $B_2$ wird allerdings ein sporadischer Eingangs-Ereignisstrom $EE_2$ erwartet. Hiervon kann eine Ereignismodell-Transformationsfunktion $EMIF_{X \rightarrow Y}$ mit $t_Y = T_X - J_X$ aus der oben beschriebenen Tabelle 1 hergeleitet werden. Der Parameter $t_Y$ für das sporadische Ereignismodell beträgt damit $t_Y = 100 - 4 = 96$.

Es wird angenommen, dass der Ausgangs-Ereignisstrom $AE_2$ bei der lokalen Analyse der zweiten Basis-Komponente $B_2$ ein periodischer Ereignisstrom mit Jitter mit den Parametern $t_X = 100$ und $J_X = 34$ bestimmt wird. Die nachfolgende dritte Basis-Komponente $B_3$ erwartet jedoch einen exakt periodischen Eingangs-Ereignisstrom $EE_3$.

Neben einer Ereignismodell-Transformationsfunktion $EMIF_{X \rightarrow Y}$ muss somit eine zusätzliche Ereignisstrom-Transformationsfunktion $EAF_{X \rightarrow Y}$ gefunden werden, um den Ausgangs-Ereignisstrom $AE_2$ an den Eingangs-Ereignisstrom $EE_3$ anzupassen.

Die Ereignismodell-Transformationsfunktion $EMIF_{X \rightarrow Y}$ ergibt sich gemäß Tabelle 2 zu $T_Y = T_X$. Die Eingangsstromereignisfunktion $EAF_{X \rightarrow Y}$ wird durch einen Zeitpuffer mit den Parametern $T_b = T_X$ und $n_b = 1$ realisiert. Die maximale Phasenverzögerung $d_{EAU}^{+}$ beträgt $T_X$. Der zeitgesteuerte Puffer $T_b$ hat somit die Parameter $T_b = 100$ und $n_b = 1$. Die maximale Zeitverzögerung beträgt $T_X = 100$.

Auf diese Weise wird der Ausgangs-Ereignisstrom $AE_2$ selbst in einen angepassten Eingangs-Ereignisstrom $EE_3$ transformiert und es kann eine lokale Analyse der dritten Basis-Komponente $B_3$ für ein periodisches-Ereignismodell durchgeführt werden. Durch die Zeitsteuerung findet eine Re-Synchronisation statt, wobei die Periode der Zeitsteuerung der mittleren Periode des nicht exakt periodischen Ausgangs-Ereignisstrom $AE_2$ entsprechen muss. Die Größe des Pufferspeichers ist daher aus den Eigenschaften des Ausgangs-Ereignisstroms $AE_2$ abgeleitet, wie oben bereits erläutert wurde.

Für die lokale Analyse der vierten Basis-Komponente $B_4$ muss der periodische Ausgangs-Ereignisstrom $AE_3$ mit Jitter und den Parametern T = 100 und J = 17 an einen periodischen Eingangs-Ereignisstrom $EE_4$ mit der Periode T = 70 angepasst werden. Hierzu ist eine Transformationsfunktion erforderlich, mit der beispielsweise die Abtastrate des Ausgangs-Ereignisstroms $AE_3$ erhöht wird, wobei in den Ereignisstrom als Zusatzkomponente ein Zeitgeber TG eingefügt wird.

Für ein derart durch Transformationsfunktionen angepasstes komplexes verteiltes Gesamtsystem können nun die bei der lokalen Analyse für die einzelnen Basis-Komponenten B aufgefundenen Gleichungssysteme zu einem Gesamtgleichungssystem in bekannter Weise zusammengefasst werden und mit verfügbaren Analysemethoden unter Verwendung des mindestens einen definierten Eingangs-Ereignisstroms $EE_1$ für das Gesamtsystem gelöst werden.

Die Verfahren zur Prozess- und lokalen Analyse zur Durchführung des erfindungsgemäßen Verfahrens sind hinreichend bekannt und beispielsweise als Softwareprogramme verfügbar.

Das Verfahren dient insbesondere für den Entwurf von komplexen verteilten Softwarelösungen oder Soft- und Hardwärelösungen, wie z. B. integrierte Schaltkreise.

**Patentansprüche**

1. Verfahren zur Analyse des Zeitverhaltens komplexer verteilter Systeme mit Basis-Komponenten (B), die Datenverarbeitungs-Programmmodule und/oder elektronische Schaltungsmodule aufweisen, mit den Schritten:

   a) Bestimmen von Eingangs-Ereignismodellen ($EM_Y$) zur Charakterisierung von Eingangs-Ereignisströmen (EE) am Eingang der jeweiligen Basis-Komponenten (B) des verteilten Systems;
   b) Bestimmen von Transformationsfunktionen ($EMIF_{X \to Y}$, $EAF_{X \to Y}$) zur Transformation der Darstellung von Eingangs-Ereignisströmen (EE) am Eingang einer Basis-Komponente (B) in ein für die Basis-Komponente (B) geeignetes Eingangs-Ereignismodell ($EM_Y$);
   c) Lokales Analysieren der Basis-Komponenten (B) mit den zugeordneten Eingangs-Ereignismodellen ($EM_Y$) zur Ermittlung der Zeitverhalten der einzelnen Basis-Komponenten (B);
   d) Bestimmen des Zeitverhaltens des komplexen verteilten Systems aus den ermittelten Zeitverhalten der einzelnen Basis-Komponenten (B).

2. Verfahren nach Anspruch 1, **gekennzeichnet durch** Bestimmen von Transformationsfunktionen ($EMIF_{X \to Y}$) zur Transformation der Darstellung von Eingangs-Ereignisströmen (EE) mittels Parameter für zugeordnete Eingangs-Ereignismodelle ($EM_Y$), um Eingangs-Ereignisströme (EE) an die Eingangs-Ereignismodelle ($EM_Y$) der jeweils zugeordneten Basis-Komponenten (B) anzupassen.

3. Verfahren nach einem der vorhergehenden Ansprüche, **gekennzeichnet durch** Bestimmen von Transformationsfunktionen ($EAF_{X \to Y}$) zur Transformation von Ereignisströmen (EE, AE), um die Ereignisströme (EE, AE) an Ereignismodelle ($EM_Y$) der jeweils zugeordneten Basis-Komponenten (B) anzupassen, und lokales Analysieren der Basis-Komponenten (B) mit den transformierten Ereignisströmen (EE, AE).

4. Verfahren nach einem der vorhergehenden Ansprüche, **gekennzeichnet durch** Bestimmen von Ausgangs-Ereignismodellen ($EM_X$) zur Charakterisierung von Ausgangs-Ereignisströmen (AE) am Ausgang der jeweiligen Basis-Komponenten (B) des verteilten Systems und Bestimmen der Transformationsfunktionen ($EMIF_{X \to Y}$, $EAF_{X \to Y}$) zugeordneter direkt nachfolgender Basiskomponenten (B) in Abhängigkeit von den Ausgangs-Ereignismodellen ($EM_X$).

5. Verfahren nach einem der vorhergehenden Ansprüche, **gekennzeichnet durch** Einfügen von Zusatzkomponenten in das System zur Realisierung von Transformationsfunktionen ($EAF_{X \to Y}$).

6. Verfahren nach Anspruch 5, **dadurch gekennzeichnet, dass** Zusatzkomponenten Datenpufferelemente und/oder Zeitgeber sind.

7. Verfahren nach einem der vorhergehenden Ansprüche, **gekennzeichnet durch** iteratives Durchführen des Analyseverfahrens und Adaptieren der Transformationsfunktionen (($EMIF_{X \to Y}$, $EAF_{X \to Y}$).

8. Verfahren nach einem der vorhergehenden Ansprüche, **dadurch gekennzeichnet, dass** den Ereignismodellen ($EM_X$, $EM_Y$) in einer Klassifikation von Zeitmodellen jeweils ein Zeitmodell zugeordnet wird und die Transformationsfunktionen ($EMIF_{X \to Y}$, $EAF_{X \to Y}$) aus den Zeitmodell-Klassen abgeleitet werden.

9. Computerprogrammerzeugnis zur Analyse des Zeitverhaltens komplexer verteilter Systeme mit Programmcodemitteln zur Durchführung des Verfahrens nach einem der vorhergehenden Ansprüche.

**Claims**

1. Method for analysis of the time response of complex distributed systems with basic components (B) which have data processing program modules and/or electronic circuit modules, having the following steps:

   a) Determination of the input event models ($EM_y$) for characterization of input event streams (EE) at the input of the respective basic components (B) in the distributed system;
   b) Determination of transformation functions ($EMIF_{x \to y}$, $EAF_{x \to y}$) for transformation of the representation of input event streams (EE) at the input of one basic component (B) in an input event model ($EM_y$) which is suitable for that basic component (B);
   c) Local analysis of the basic components (B) using the associated input event models ($EM_y$) in order to determine the time responses of the individual basic components (B);
   d) Determination of the time response of the complex distributed system from the determined time responses of the individual basic components (B).

2. Method as claimed in claim 1, **characterized by** determination of transformation functions ($EMIF_{x \to y}$) for transformation of the representation of input event streams (EE) by means of parameters for associated input event models ($EM_y$), in order to match input event streams (EE) to the input event models ($EM_y$) of the respectively associated basic components (B).

3. Method as claimed in one of the preceding claims, **characterized by** determination of transformation functions ($EAF_{x \to y}$) for transformation of the event streams (EE, AE), in order to match the event streams (EE, AE) to event models ($EM_y$) of the respectively associated basic components (B), and local analysis of the basic components (B) using the transformed event streams (EE, AE).

4. Method as claimed in one of the preceding claims, **characterized by** determination of output event models ($EM_x$) in order to record output event streams (AE) at the output of the respective basic components (B) in the distributed system, and determination of the transformation functions ($EMIF_{x \to y}$, $EAF_{x \to y}$) of associated directly subsequent basic components (B) as a function of the output event models ($EM_x$).

5. Method as claimed in one of the preceding claims, **characterized by** insertion of additional components into the system in order to produce transformation functions ($EAF_{x \to y}$).

6. Method as claimed in claim 6, **characterized in that** additional components are data buffer elements and/or timers.

7. Method as claimed in one of the preceding claims, **characterized by** the analysis method and adaptation of the transformation functions ($EMIF_{x \to y}$, $EAF_{x \to y}$) being carried out iteratively.

8. Method as claimed in one of the preceding claims, **characterized in that** each event model ($EM_x$, $EM_y$) is in a classification of time models, assigned one time model class and that the transformation functions ($EMIF_{x \to y}$, $EAF_{x \to y}$) are derived from the time model classes.

9. A computer program product for analysis of the time response of complex distributed systems with program code means for carrying out the method as claimed in one of the preceding claims.

**Revendications**

1. Procédé destiné à analyser la caractéristique temporelle de systèmes complexes distribués contenant des composants de base (B) qui présentent des modules de programme informatique - traitement de données et/ou des modules de circuits électroniques, comprenant les étapes suivantes :

a) définition de modèles d'évènement d'entrée ($EM_Y$) pour caractériser des flux d'évènements d'entrée (EE) à l'entrée de chacun des composants de base (B) du système distribué ;

b) définition de fonctions de transformation ($EMIF_{X->Y}$, $EAF_{X->Y}$) pour transformer la représentation de flux d'évènements d'entrée (EE) à l'entrée d'un composant de base (B) en un modèle d'évènement d'entrée ($EM_Y$) adapté aux composants de base (B) ;

c) analyse locale des composants de base (B) avec les modèles d'évènement d'entrée ($EM_Y$) associés, pour déterminer la caractéristique temporelle des composants de base (B) individuels ;

d) définition de la caractéristique temporelle du système complexe distribué, à partir des caractéristiques temporelles déterminées des composants de base (B) individuels.

2. Procédé selon la revendication 1, **caractérisé par** la définition de fonctions de transformation ($EMIF_{X->Y}$) destinées à transformer la représentation de flux d'évènements d'entrée (EE) au moyen de paramètres pour des modèles d'évènement d'entrée ($EM_Y$) associés, de façon à adapter des flux d'évènements d'entrée (EE) aux modèles d'évènement d'entrée ($EM_Y$) des composants de base respectivement associés.

3. Procédé selon l'une des revendications précédentes, **caractérisé par** la définition de fonctions de transformation ($EAF_{X->Y}$) destinées à transformer des flux d'évènements (EE, AE) de façon à adapter les flux d'évènements (EE, AE) à des modèles d'évènement ($EM_Y$) des composants de base (B) respectivement associés, et par l'analyse locale des composants de base (B) avec les flux d'évènements (EE, AE) transformés.

4. Procédé selon l'une des revendications précédentes, **caractérisé par** la définition de modèles d'évènement de sortie ($EM_X$) pour caractériser des flux d'évènements de sortie (AE) à la sortie de chacun des composants de base (B) du système distribué, et la définition des fonctions de transformation ($EMIF_{X->Y}$ $EAF_{X->Y}$) de composants de base (B) associés qui suivent directement, en fonction des modèles d'évènement de sortie ($EM_X$).

5. Procédé selon l'une des revendications précédentes, **caractérisé par** l'insertion de composants additionnels dans le système, pour réaliser des fonctions de transformation ($EAF_{X->Y}$).

6. Procédé selon la revendication 5, **caractérisé en ce que** des composants additionnels sont des éléments tampons de données et/ou des temporisateurs.

7. Procédé selon l'une des revendications précédentes, **caractérisé par** une exécution itérative du procédé d'analyse et une adaptation des fonctions de transformation ($EMIF_{X->Y}$, $EAF_{X->Y}$).

8. Procédé selon l'une des revendications précédentes, **caractérisé en ce qu'**on associe dans une classification de modèles temporels, à chaque fois un modèle temporel aux modèles d'évènement ($EM_X$, $Ex_Y$), et on déduit les fonctions de transformation ($EMIF_{X->Y}$, $EAF_{X->Y}$) des classes de modèles temporels.

9. Programme d'ordinateur dont le but est d'analyser la caractéristique temporelle de systèmes complexes distribués comprenant des moyens de code de programme pour exécuter le procédé selon l'une des revendications précédentes.

Fig. 1

Fig. 2

Fig. 3

Fig. 4

Fig. 5

$B_1$

$B_2$

$B_3$

$B_4$

$P_n$ $P_n$ $P_n$ $P_n$

$EE_1$ $AE_1$ $EE_2$ $AE_2$ $EE_3$ $AE_3$ $EE_4$ $AE_4$

$P_1$ $P_2$ TB $P_3$ TG $P_4$

T = 100 T = 100 t = 96 T = 100 T = 100 T = 100 T = 70
J = 4 J = 34 T = 100 J = 17

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **C. L. Liu ; J. W. Layland.** Scheduling Alghorithms for Multiprogramming in a Hard-Real-Time Environment. *Journal of the Association for Computing Machinery,* Januar 1973, vol. 20 (1), 46-61
- **K. W. Tindell.** An Extendible Approach For Analysing Fixed Priority Hard Real-Time Tasks. *Journal of Real-Time Systems,* Marz 1994, vol. 6 (2), 133-152
- **H. Kopetz ; G. Grünsteidl.** TTP - A Protocol for Fault-Tolerant Real-Time Systems. *IEEE Trans.Computers,* Januar 1994, 14-23

- **Pai H.Chou ; Gaetano Boriello.** Synthesis and Optimization of Coordination Controllers for Distributed Embedded Systems. *Proc. Design Automation Conference,* 2000, 410 ff
- **M. Jersak ; K. Richter ; R. Ernst.** Combining complex event models and timing constraints. *Proceedings of SIXTH IEEE INTERNATIONAL HIGH-LEVEL DESIGN VALIDATION AND TEST WORKSHOP,* 07. November 2001, 89-94